## Europäisches Patentamt

## European Patent Office

## Office européen des brevets

(19)

(11) Veröffentlichungsnummer: **0 114 214**

**A1**

(12)

# EUROPÄISCHE PATENTANMELDUNG

(21) Anmeldenummer: **83111003.6**

(22) Anmeldetag: **04.11.83**

(51) Int. Cl.³: **A 62 B 35/02**

(30) Priorität: **16.12.82 DE 3246638**

(43) Veröffentlichungstag der Anmeldung:
**01.08.84 Patentblatt 84/31**

(84) Benannte Vertragsstaaten:
**BE DE FR GB IT NL SE**

(71) Anmelder: **Adomeit, Heinz-Dieter, Dr.-Ing**
**Grolmanstrasse 16**
**D-1000 Berlin 12(DE)**

(72) Erfinder: **Adomeit, Heinz-Dieter, Dr.-Ing**
**Grolmanstrasse 16**
**D-1000 Berlin 12(DE)**

(74) Vertreter: **Weber, Dieter, Dr. et al,**
**Dr. Dieter Weber und Klaus Seiffert Patentanwälte**
**Gustav-Freytag-Strasse 25**
**D-6200 Wiesbaden 1(DE)**

(54) **Vorrichtung zum lösbaren Festklemmen eines strangförmigen Materials.**

(57) Beschrieben ist eine Vorrichtung zum lösbaren Festklemmen eines Seiles (6), bestehend aus einem Gehäuse (1), einem drehbar darin gelagerten (bei 7) Klemmhebel (3) und zwei Klemmflächen (2, 8), von denen die erste am Gehäuse (1) und die zweite am Klemmhebel (3) angeordnet ist und zwischen denen das Seil (6) verläuft. Dieses ist ferner um mindestens eine Umlenkstelle (8-10) herumgeführt, wobei der Klemmhebel (3) auf ein Hebelverhältnis b/a so ausgelegt ist, daß höchstens der Reibbeiwert μ an Reibstelle erreicht wird.

Damit der benötigte Bauraum geringer wird, dennoch ein sicheres Halten des Seiles - sogar unter ruhendem oder wechselndem Zug - ebenso gewährleistet ist wie ein leichtes und definiertes Öffnen, wird erfindungsgemäß vorgesehen, daß an dem Klemmhebel (3) drei Umlenkstellen (8-10) angeordnet sind, deren Achsen parallel zur Drehachse (7) des Klemmhebels (3) und parallel zueinander verlaufen und ein Dreieck aufspannen und daß ein drehbar (bei 11) im Gehäuse (1) gelagerter Auslösehebel (4) mit einer Auslösenocke (12) für die Beaufschlagung eines am Klemmhebel (3) befestigten Eingriffteiles (10; 22) vorgesehen ist.

EP 0 114 214 A1

Fig.1

Die Erfindung betrifft eine Vorrichtung zum lösbaren Festklemmen eines strangförmigen Materials, insbesondere eines Seiles, bestehend aus einem Gehäuse, einem drehbar darin gelagerten Klemmhebel und zwei Klemmflächen, von denen die erste am Gehäuse und die zweite am Klemmhebel angeordnet ist und zwischen denen der Strang verläuft, der ferner um mindestens eine Umlenkstelle herumgeführt ist, wobei der Klemmhebel auf ein Hebelverhältnis b/a so ausgelegt ist, daß höchstens der Reibbeiwert µ an der Reibstelle erreicht wird.

Bei Sicherheitsgurtsystemen sind Gurtaufwickelklemmautomaten bekannt, bei denen der Klemmhebel vom Gurtband in die eine oder andere Richtung gekippt wird. Mit Nachteil tritt hierbei außerdem unvermeidbar ein selbstverstärkendes Moment auf, das zu einer örtlichen Überlastung des Stranggewebes führt, möglicherweise bis zur Selbsthemmung. Bei den meisten bekannten Klemmeinrichtungen ist ein gewisses selbsthemmendes Moment sogar erwünscht, weil es auf den ersten Blick eine sichere Klemmung des Gurtbandes zu gewährleisten scheint. Dabei ist aber ein ständiger Abrieb bei den normalen Bewegungen des Benutzers zu befürchten.

Bei einer bekannten Vorrichtung zum Festklemmen eines Seiles wird die Klemmwirkung durch eine ungünstig steile Lage des Wirkhebels erreicht. In einem Gehäuse befindet sich an einer Seite im oberen Bereich ein Lager, um welches der Wirkhebel, an dessen wirkseitigem, freiem Ende scharfe Zähne vorgesehen sind, auf einem Kreis derart dreht, daß sich die Zähne schließlich in Auszugrichtung des Seiles bewegen. In diesem Zustand beginnt die Klemmung. Mit Nachteil steht der Wirkhebel dabei aber sehr steil, teilweise nur 5 bis 10° gegen die Vertikale. Die Zähne krallen sich im Klemmzustand scharf in das Seil ein, und durch die Lage des Wirkhebels entstehen hohe Quetschkräfte. Diese steigen in Normalrichtung zur Seilauszugsrichtung sprunghaft umso mehr an, je weiter im Seil gezogen wird. Hierdurch ergibt sich ein Reißeffekt.

Die Auslösung erfolgt über einen Handhebel, welcher den Wirkhebel gegen die Seilzugkraft, mit Nachteil zusätzlich aber auch gegen die aufgebauten Reib-Scherkräfte in der Klemmfläche aus der Klemmstellung anheben soll. Dazu steht ein Hebelübersetzungsverhältnis von etwa 3 : 1 oder 4 : 1 zur Verfügung.

Bei der bekannten Klemmvorrichtung ist ein sicheres Halten also nur mit gewebeschädigenden scharfen Zähnen möglich. Anderenfalls wäre ein noch kleinerer Keilwinkel (unter 5°) mit der Folge einer sofortigen Selbsthemmung bzw. Bekneifung nötig, d.h. ein Öffnen ohne Zerstörung des Seiles wäre dann nicht mehr möglich. Ferner erfolgt ein Klemmen des Seiles nur mit Scherbewegung der Klemmbacke auf dem Seil. Scherkräfte verschleißen aber das Seil ersichtlich. Wird ein größerer Keilwinkel gewünscht, dann sind scharfe Zähne zu verwenden, d.h. ein großer Reibbeiwert $\mu$. Der Einsatz scharfer Zähne widerspricht aber der gewünschten Schonung des Seiles.

Bei Sicherheitsgurten in Fahrzeugen ist bereits ein Klemmautomat in der DE-PS 2 432 956 entwickelt und beschrieben, der mit schonender, kleinstmöglicher Klemmkraft arbeitet und bei Entlastung freigibt, ohne daß Gurtrisse zu befürchten sind. Hier wird der Gurt reibungsfrei zwischen zwei Klemmflächen und durch den Klemmhebel hindurchgeführt, wie eingangs erläutert. Während mit der bekannten Klemmvorrichtung bereits zahlreiche Vorteile und Ziele wunschgemäß erreicht werden, ist eine gewisse Baugröße nicht zu unterschreiten, welche durch die Länge des Klemmhebels gegeben ist, weil das Gurtband von dessen Anfang zu dessen Ende parallel zu diesem geführt und an beiden Enden desselben senkrecht aus diesem heraus- bzw. hineingeführt wird.

Die Aufgabe der vorliegenden Erfindung ist die Verbesserung der Klemmvorrichtung der eingangs bezeichneten Art dahingehend, daß der benötigte Bauraum geringer wird, dennoch ein sicheres Halten des Stranges - sogar unter ruhendem oder wechselndem Zug - ebenso gewährleistet ist wie ein leichtes und definiertes Öffnen. Dabei sollen die bei der Gurtklemmvorrichtung erzielten Vorteile der Schonung des Stranges und Lösen desselben ohne Geweberisse erhalten bleiben.

Diese Aufgabe wird erfindungsgemäß dadurch gelöst, daß an dem Klemmhebel drei Umlenkstellen angeordnet sind, deren Achsen parallel zur Drehachse des Klemmhebels und parallel zueinander verlaufen und ein Dreieck aufspannen und daß ein drehbar im Gehäuse gelagerter Auslösehebel mit einer Auslösenocke für die Beaufschlagung eines am Klemmhebel befestigten Eingriffteiles vorgesehen ist. Die Klemmkraft ist durch die Ausgestaltung der neuen Vorrichtung wiederum praktisch eine reine Normalkraft; denn die hebelseitige Klemmfläche wird senkrecht zur Seillängsrichtung auf die gehäuseseitige Klemmfläche gedrückt. Damit wird das Seil äußerst schonend an der Klemmfläche vorbeigeführt, da die Klemmkraft, die reine Normalkraft, stets optimal klein, wenngleich ausreichend hoch ist. Es treten also praktisch nur Druckkräfte auf dem Seil auf, nicht aber Scherbelastungen, Scherspannungen usw., welche das Flechtwerk zuerstören könnten.

Der Klemmhebel ist bei einer bevorzugten Ausführungsform aus zwei in Draufsicht im wesentlichen gleich ausgestalteten Platten aufgebaut, welche durch Dreh- und/oder Umlenkstellen miteinander verbunden und im Abstand zueinander gehalten werden. Insbesondere ist das Drehlager für den Klemmhebel, welches außerhalb des aufgespannten Dreieckes angeordnet ist als Abstandshalter vorgesehen. Zusätzlich können auch die am Klemmhebel befestigten Umlenkstellen in Gestalt von Hülsen, Bolzen, Schrauben oder dergleichen ausgebildet sein und als Abstandshalter dienen. Außerdem ist der Klemmhebel bei dieser Ausgestaltung zwischen zwei parallelen Gehäusewandungen drehbar angeordnet, die ebenfalls im Abstand zueinander angeordnet sind, wobei vorzugsweise unter anderem die gehäusefeste Klemmbacke wie ein Distanzstück wirkt, die mittels durchgehenden Nieten die beiden Gehäusewandungen im Abstand und parallel zueinander hält und gleichzeitig neben dem drehbaren Klemmhebel angeordnet ist.

Bei vorteilhafter weiterer Ausgestaltung der Erfindung ist der Auslösehebel zwischen den Gehäuseaußenwandungen einerseits und dem Klemmhebel andererseits angeordnet. Dadurch läßt sich mit einfachen Mitteln ein stabiler und dennoch kompakter und im Gewicht leichter Aufbau erreichen.

Erfindungsgemäß ist es auch zweckmäßig, wenn das Steuerteil eine Rolle oder ein in Richtung der Drehachse des Klemmhebels aus diesem herausstehender, den Auslösehebel überlappender Vorsprung ist. Ein solcher Vorsprung kann als Zapfen, Bolzen oder dergleichen ausgebildet sein und braucht nur einseitig aus dem Klemmhebel so herausstehen, daß der Auslösehebel überlappt wird, d.h. der Vorsprung seitlich derart über den Auslösehebel heraussteht, daß dieser zwangsläufig bei einer bestimmten Stellung mit diesem Vorsprung in Eingriff tritt.

Vorteilhaft ist es ferner, wenn erfindungsgemäß die zweite, klemmhebelseitige Klemmfläche und/oder die auslaufseitige Umlenkstelle als Rollen ausgebildet sind, wobei die erste Klemmfläche als der Klemmrolle entsprechende, bogenförmige Klemmbacke ausgestaltet ist. Zweckmäßig ist es auch, wenn die Auslösenocke eine Druckrolle ist. Die Ausbildung der hebelseitigen Klemmfläche als Rolle, wodurch eine sogenannte Klemmrolle entstanden ist, erlaubt die Einsparung einer weiteren Umlenkrolle, die sonst im Bereich des Drehlagers des Klemmhebels im Gehäuse notwendig wäre, wenn man eine extrem gekrümmte Schlaufe im Seil bildet und optimal kleine Bauhöhe für die Schaffung einer kompakten Klemmvorrichtung -wünscht.

Man kann die Vorrichtung erfindungsgemäß auch so ausgestalten, daß der Klemmhebel - in der Linie von seinem Drehlager im Gehäuse über die Klemmfläche zu der als Nockenfolger ausgestalteten auslaufseitigen Umlenkstelle - gegenüber der als horizontal angenommenen Grundläche des Gehäuses unter einem Winkel von 30 bis 60° schräg angestellt ist, wobei die Richtung der Zugkraft im Strang als etwa parallel zur Grundfläche verlaufend vorgesehen ist.

Der körperliche Klemmhebel kann trotz Einhaltung der erfindungsgemäß vorgesehenen Bedingungen verschiedene Gestaltungen haben. Auch die im Klemmhebel gedachte Linie vom Gehäusedrehlager über die hebelseitige Klemmfläche zur auslaufseitigen Umlenkstelle kann gerade oder gebogen sein. Wenn man den Klemmhebel unter dem genannten Winkel von z.B. 45° schräg zur Grundfläche des Gehäuses anstellt, wird die Baugröße des Gehäuses erheblich verringert. Dennoch ist die geforderte Umlenkung des Stranges bzw. Seiles bei der vorstehend erläuterten Ausführungsform in gewünschter Weise gegeben, so daß sich der genannte Wirkhebel ergibt, welcher die Projektion im rechten Winkel zur Seilzugrichtung ist. Das Gehäuse der Klemmvorrichtung kann durch die erfindungsgemäßen Maßnahmen, insbesondere im Bereich des Klemmhebeldrehlagers im Gehäuse, kürzer gestaltet werden, ohne daß die Bauhöhe geopfert werden muß. Dennoch kann man das verlangte Hebelverhältnis auf optimale Werte einstellen, so daß unter Last kein Schlupf, d.h. kein Kriechen des Seiles, zu befürchten ist.

Der drehbar im Gehäuse gelagerte Auslösehebel ist vorzugsweise ein Handhebel, der im Falle der Auslösung maximal die wirkliche Seilzugkraft überwinden muß, mit Vorteil nicht aber zusätzliche Reib-, Scher- und Keilquetschkräfte oder Bekneifungskräfte in Auslöserichtung überwinden muß, da solche nicht existieren. Über eine Dosierung der Handhebelkraft ist ein gesteuerter Schlupf an der Klemmstelle möglich. Beim Segeln, bei welchem die Klemmvorrichtung gemäß der Erfindung besonders günstig eingesetzt werden kann, wird das leichte, dosierte Nachregulieren zum Fieren benötigt. Beim Auslösen mit einem fühlbaren Übergangsbereich ist aber der Schlupfpunkt durch die Maßnahmen gemäß der Erfindung genau definiert und immer in der gleichen Hebelstellung möglich, wenn man eine bestimmte Seildicke und -type voraussetzt.

Ein weiterer Vorteil sind die geringen Hubbewegungen der auslaufseitigen Umlenkstelle mit dem Klemmhebel, um vom gelösten wieder in den absolut sicheren Blockierzustand zu gelangen. Dadurch sind gewünschte Seilstellungen sehr exakt einstellbar und werden nicht durch Setzeffekte oder Kriechwirkungen zunichte gemacht, nicht einmal gestört.

Die vorstehend erwähnte, bevorzugte Ausführungsform der Erfindung ist im Hinblick auf diese Überlegungen dadurch gekennzeichnet, daß im Abstand senkrecht zur Hebellinie zwischen Drehlager und Umlenkrolle eine rücklaufseitige Umlenkrolle am Klemmhebel drehbar gelagert ist unter Bildung einer U-förmigen Schlaufe des Stranges mit drei Umlenkungen. Das Gehäuse der Klemmvorrichtung gemäß der Erfindung ist als im Querschnitt U-förmiges Teil mit Deckel zu verstehen, welcher die beiden freien Schenkel des U verbindet. Deckel und Grundfläche des Gehäuses liegen bei dieser bevorzugten Ausführungsform parallel zueinander, vorzugsweise in einem Fahrzeug in einer horizontalen Ebene. Dabei kann der Deckel unten und die Grundfläche oben liegen oder umgekehrt. Auch andere Anordnungen der Klemmvorrichtung im Raum sind möglich. Zum leichteren Verständnis wird davon ausgegangen, daß die Grundfläche in der Horizontalen liegt. Bei der zuletzt beschriebenen Ausführungsform liegt die Zugrichtung des Seiles sowohl einlaufseitig als auch auslaufseitig ebenfalls in der Horizontalen. Die erwähnte Schlaufenbildung erfolgt also unter zweimaliger Umlenkung des Seiles senkrecht zur Horizontalen, nämlich an der einlaufseitigen Umlenkstelle herum nach "oben" (in Richtung des Deckels) zwischen Drehlager des Klemmhebels im Gehäuse und Klemmrolle diese um etwa 180° umgreifend und wieder zurück nach "unten" (in Richtung der Grundfläche), um dann wieder von der auslaufseitigen Umlenkstelle in die Horizontale zurückgelenkt zu werden. Hierdurch entsteht eine U-förmige Schlaufe des Stranges bzw. Seiles, wie vorstehend erläutert.

Durch die drehbare Anlenkung der rücklaufseitigen bzw. einlaufseitigen Umlenkrolle am Klemmhebel ergibt sich bei der Betrachtung senkrecht auf die Schlaufe eine etwa dreieckförmige Ausgestaltung des Klemmhebels, dessen Hypotenuse die betrachtete Linie ist, die unter dem vorstehend erwähnten Winkel von z.B. 45° zur Grundfläche liegt. Die einlauf- bzw. rücklaufseitige Umlenkrolle liegt an der Spitze dieses Dreieckes, der Hypotenuse bzw. Hebellinie gegenüber. Bewegt man die rücklaufseitige Umlenkstelle von der Seilschlaufe fort, dann muß sich der Klemmhebel zwangsläufig um sein Drehlager drehen, wobei die Klemmung des Seiles zwischen den beiden Klemmbacken entlastet wird. Hierdurch ergibt sich mit Vorteil die Möglichkeit einer weiteren Seilverkürzung im geklemmten Zustand. Es erfolgt also ein Durchzug des Seiles nach rückwärts, d.h. entgegen der Auszugsrichtung des Seiles. Wenn beim Rückziehen des Seiles automatisch eine Entlastung desselben an der Klemmstelle erfolgt, ergibt sich ersichtlich eine Schonung des Seilflechtwerkes, Abscherkräfte und der damit verbundene Verschleiß des Seiles wie im Falle der bekannten Keilklemmsysteme gibt es erfindungsgemäß nicht.

Aus den vorstehend beschriebenen Ausführungsformen erkennt man die große Freiheit des Konstrukteurs bei der Gestaltung des Klemmhebels. Dieser kann dreieckig, viereckig oder rund ausgestaltet sein und in verschiedenen Positionen zur Grundfläche drehend vorgesehen sein, sofern nur der erwähnte Wirkhebel - d.h. die Projektion der Hebellinie zwischen Drehstelle des Klemmhebels und auslaufseitiger Umlenkstelle, im rechten Winkel zur Seilzugrichtung - im richtigen Verhältnis zu dem Wirkhebel zwischen dem Drehlager des Klemmhebels und der Klemmrolle steht. Dieser sogenannte kleinere Wirkhebel ist stets so zu wählen, daß man eine gute, gesicherte Normalkraftklemmung zwischen den beiden Klemmflächen erhält, ohne daß Keilklemmung oder Scherkräfte entstehen. Bei festgelegtem kleinem Wirkhebel ist dann in günstiger Ausgestaltung je nach Platzverhältnissen der Abstand zwischen dem Drehlager des Klemmhebels im Gehäuse zur auslaufseitigen Umlenkstelle optimal wählbar.

Für den kleinen Wirkhebel wird man den Abstand zwischen dem Drehlager des Klemmhebels im Gehäuse einerseits und der Klemmrolle andererseits in der Regel so groß wie die Dicke des Seiles oder größer gestalten. Dies ist insbesondere zweckmäßig, wenn das Seil zwischen den beiden Punkten hindurchgeführt wird. Bei einer anderen Ausführungsform kann das Seil aber auch über das Drehlager des Klemmhebels gelegt zwischen die Klemmbacken geführt werden, so daß der kleine Wirkhebel, d.h. der Abstand zwischen Drehlager und Klemmrolle dann auch geringer ausgeführt werden kann. Beim Segeln ist häufig ein schnelles Ausrauschen gewünscht, so daß gemäßigtere Biegeradien im Seil günstiger sein können.

Vorteilhaft ist es gemäß der Erfindung ferner, wenn die Klemmbacke gegenüber dem Gehäuse verschiebbar und über ein Gelenk mit dem Klemmhebel gekoppelt ist. Mit Vorteil kann hierbei zum völligen Öffnen der Hub des Klemmhebels bzw. der dessen Bewegungen auslösenden Konstruktionsteile reduziert werden. Beispielsweise kann dadurch die notwendige Schwenkbewegung eines Handauslösehebels verkleinert werden, oder auch der Rückzugsweg des Seiles an der rücklaufseitigen Umlenkstelle kann schon bei geringerem Betrag zum völligen Öffnen der Klemmvorrichtung führen. Das Gelenk kann ein am Klemmhebel befestigter Zapfen sein, der in einem Langloch an der gehäuseseitigen Klemmbacke liegt. Konstruktiv sind aber auch umgekehrte Verhältnisse ebenso wirksam (Stift an der gehäuseseitigen Klemmbacke).

In zweckmäßiger weiterer Ausgestaltung der Erfindung ist vorgesehen, daß die Klemmbacke über eine Einstellschraube gegenüber dem Gehäuse einstellbar ist. Hierdurch kann man eine Einstellung für verschiedene Seildicken vornehmen. Es soll stets die auf das Seil wirkende Normalkraft eingestellt werden, damit die Arbeitsgeometrie des Klemmhebels konstant gehalten werden kann. Mit anderen Worten soll die Stellung des Klemmhebels im Klemmzustand gleich gehalten werden, damit das Verhältnis des großen und kleinen Wirkhebels konstant bleibt.

Die Einstellschraube kann gleichzeitig auch als Abstütze der gehäuseseitigen Klemmbacke am Gehäuse dienen, damit beispielsweise ein Wegrutschen der Klemmbacke mit Sicherheit ausgeschaltet ist, selbst wenn diese nur gegen den Deckel des Gehäuses abgestützt ist. Die Einstellschraube würde dann den Druck aufnehmen helfen, der über die hebelseitige Klemmrolle auf die gehäuseseitige Klemmbacke wirkt und ein Fortdrücken versucht. Die starke Belastung auf den Deckel des Gehäuses kann dadurch mit bereits vorhandenen Teilen verringert werden. Alternativ wäre bei einer anderen Ausführungsform oder zusätzlich zu der mit der Einstellschraube eine hakenförmige Verlängerung der gehäuseseitigen Klemmbacke zweckmäßig, welche sich gegen das Drehlager des Klemmhebels am Gehäuse abstützt.

Eine weitere vorteilhafte Ausgestaltung der Erfindung ist dadurch gekennzeichnet, daß die Druckrolle zum Auslösen der Klemmung um das Drehlager des Auslösehebels so weit schwenkbar ist, daß sie sich in der Endauslösestellung jenseits der Line zwischen Umlenkrolle und Drehlager befindet. Mit dieser Maßnahme wird erreicht, daß der Klemmhebel nach Öffnen, d.h. nach Herausschwenken des Handauslösehebels in die Öffnungsstellung, geöffnet bleibt; denn die Druckrolle drückt in dieser Stellung sozusagen über einen Totpunkt auf die Umlenkrolle. Daher kann ein Klemmhebelmoment in Richtung Schließen der Klemme von der Druckrolle abgestützt werden. Der Handauslösehebel ruht dabei mit seinem Eigengewicht auf einem am Gehäuse befestigten Anschlag für den Handauslösehebel.

Bei drastischer weiterer Verringerung der Bauhöhe unter geringerer Verlängerung des Gehäuses ist eine Z-förmige Seilführung möglich, die durch eine zusätzliche gehäusefeste oder verstellbare Stütz- oder Umlenkrolle an der Auslaufseite erreicht wird. Bei einer Vorrichtung der eingangs genannten Art ist es erfindungsgemäß zweckmäßig, wenn an dem Klemmhebel mindestens zwei Umlenkstellen angeordnet sind, deren Achsen parallel zur Drehachse des Klemmhebels und parallel zueinander verlaufen und wenn ein drehbar im Gehäuse gelagerter Auslösehebel einen drehbar gelagerten Kniehebel haltert, der als starre Stange für eine Stützrolle dient, deren Achse in einem gehäusefesten Schlitz geführt ist. Bei dieser Ausführungsform kann man den Aufbau in einer Raumrichtung stark zusammendrücken und kleiner ausgestalten.

Weitere Vorteile, Merkmale und Anwendungsmöglichkeiten der vorliegenden Erfindung ergeben sich aus der folgenden Beschreibung bevorzugter Ausführungsbeispiele in Verbindung mit den Zeichnungen. Es zeigen

Fig. 1 eine schematische Seitenschnittansicht durch eine erste bevorzugte Ausführungsform der Erfindung mit dreieckförmigem Klemmhebel und U-förmiger Seilschlaufe,

Fig. 2 abgebrochen einen Teilquerschnitt durch Fig. 1 entlang der Line II-II,

Fig. 3a bis Fig. 3c die Einzelteile der Vorrichtung gemäß Fig. 1 in getrennter Darstellung,

Fig. 4 eine abgebrochene Seitenschnittansicht ähnlich der Fig. 1, wobei jedoch das Kopplungsgelenk zwischen Klemmhebel und gehäuseseitiger Klemmbacke als zweite bevorzugte Ausführungsform gezeigt ist,

Fig. 5 in ähnlicher Darstellung wie Fig. 4 eine dritte bevorzugte Ausführungsform mit Einstellschraube zur Verstellung der gehäuseseitigen Klemmbacke.

Fig. 6 in ähnlicher Darstellung wie Fig. 1 eine Seitenschnittansicht einer anderen Ausführungsform mit Z-förmiger Seilführung,

Fig. 7 eine weitere andere Ausführungsform der Erfindung, bei welcher eine ähnliche Darstellung wie bei den Figuren 1 und 6 gewählt ist, und

Fig. 8 eine Schnittansicht ähnlich wie Figur 2, wobei jedoch noch weitere Einzelheiten bei der letztgenannten Ausführungsform nach Figur 7 erkennbar sind.

Das Gehäuse 1 besteht aus einer Grundfläche 17, aus der U-förmig die Seitenflächen 20 herausgebogen sind, deren Schenkel mit dem Deckel 19 verbunden sind. Das Gehäuse kann zwar im Querschnitt das Profil eines geschlossenen U haben, kann aber auch gemäß Darstellung in den Figuren unten im Bereich der Grundfläche 17 offen sein.

Am Deckel 19 des Gehäuses 1 ist die gehäuseseitige Klemmbacke 2 befestigt, die bei der Darstellung der Seitenquerschnittsansichten im rechten Teil Rollenformkontur hat entsprechend der klemmhebelseitigen Klemmrolle 8, die am Klemmhebel 3 drehbar befestigt ist und den besonders bevorzugten geringen Rollwiderstand (Schonung des Seiles 6) hat. Links weist die Klemmbacke 2 einen Haken 18 auf, welcher das Drehlager 7 des Klemmhebels 3 im Gehäuse 1 umgreift und eine zusätzliche Abstützung für die Klemmbacke 2 bedeutet.

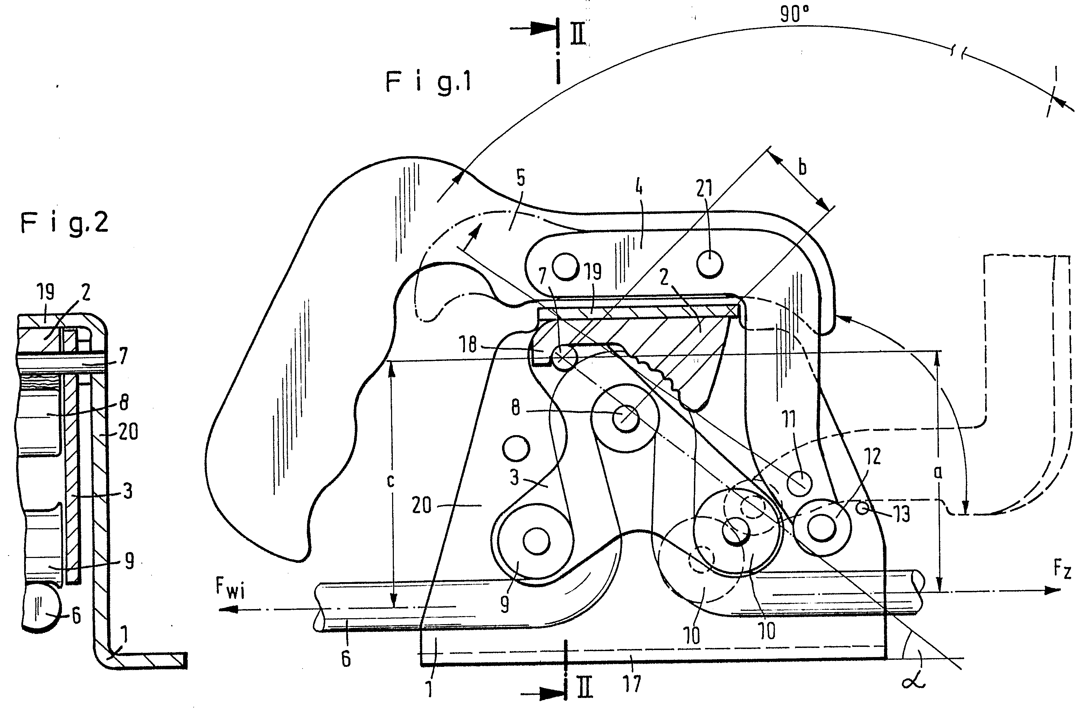

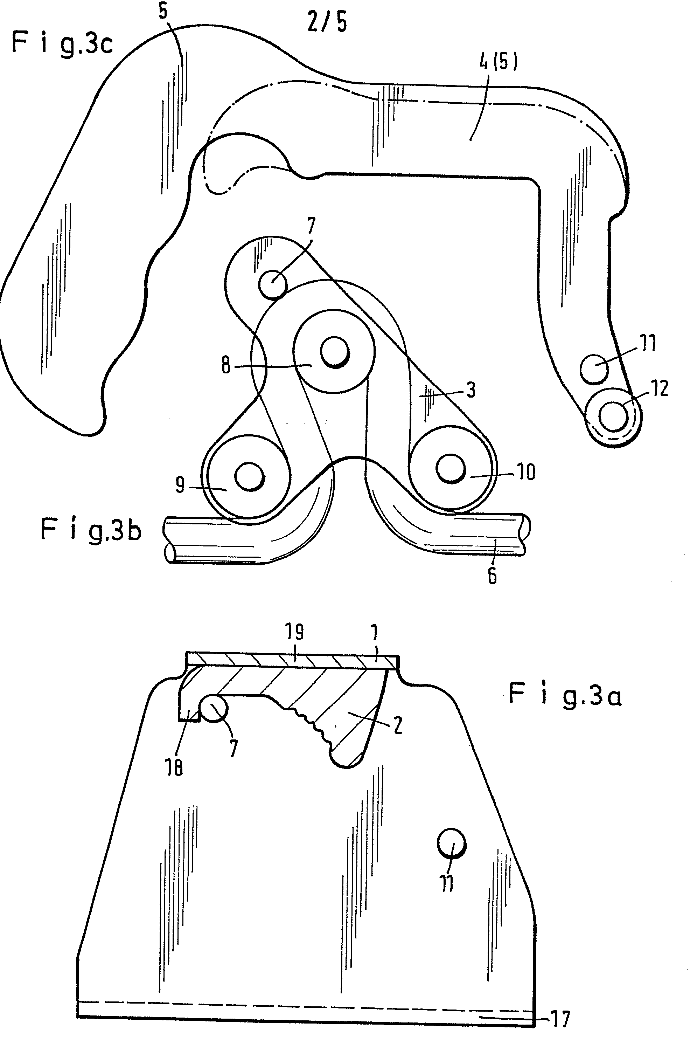

Der Klemmhebel 3 ist bei den Ausführungsformen nach den Fig. 1 bis 5 dreieckförmig in der Seitenansicht, wie hier gezeigt, wobei sich die gedachte Hebellinie vom Drehlager 7 im Gehäuse 1 über die Klemmrolle 8 zu der als Rolle ausgestalteten auslaufseitigen Umlenkstelle 10 gerade ist. Diese gerade Hebellinie 7; 8, 10 liegt unter einem Winkel $\alpha$ (Fig. 1) unter etwa 30° zur Grundfläche 17 des Gehäuses 1. Der dritte Punkt des dreieckigen Klemmhebels 3 ist die rücklaufseitige Umlenkrolle 9.

Ferner ist im Gehäuse 1 über das Drehlager 11 ein Handauslösehebel 4 angelenkt, der L-förmig das Gehäuse 1 umgreift, sich hier insbesondere über den Deckel 19 erstreckt. Mittels Nietstellen 21 ist zur Verlängerung ein weiterer Hebel 5 befestigt, so daß man mit dem Zeigefinger oder gar mit der ganzen Hand eine gute Greifmöglichkeit hat. Der Handauslösehebel 4 ist um das genannte Drehlager 11 im Gehäuse drehbar. Im kurzen Abstand vom Drehlager 11(gegenüber den Greifteilen 5) ist eine Druckrolle 12 drehbar angebracht, die dicht neben der auslaufseitigen Umlenkrolle 10 am Klemmhebel 3 angeordnet ist und bei der Bewegung mit dieser in Wirkeingriff treten kann. Außerdem ist am Gehäuse 1 ein Anschlag 13 für die Begrenzung der Drehbewegung des Handauslösehebels 4, 5 vorgesehen.

Der Abstand zwischen dem Drehlager 7 des Klemmhebels 3 und der Klemmrolle 8 in der Hebellinie ist der kleine Wirkhebel b. Der große Wirkhebel a ist die Projektion im rechten Winkel zur Zugrichtung $F_z$ bzw. $F_{wi}$ im Seil 6, und zwar von dem Drehlager 7 bis zum unteren Umfang der auslaufseitigen Umlenkrolle 10, wobei dieser Wirkhebel a die Klemmkraft erzeugt. Der Abstand zwischen dem Drehlager 7 und der Mitte des Seiles 6 an der Rücklaufseite ist als wirksamer Hebelarm c des Klemmhebels 3 zum Rückzugseil (Winsch) bezeichnet. Damit ist a der wirksame Hebelarm (bzw. Wirkhebel) des Klemmhebels 3 zum Zugseil $F_z$ und b der wirksame Hebelarm (kleine Wirkhebel) des Klemmhebels 3 zur Klemmstelle 8, 2.

Im Betrieb zieht die Seilkraft $F_Z$ den Klemmhebel 3 mit seiner Klemmrolle 8 gegen die Klemmbacke 2. Die Klemmrolle 8 erzeugt die erwähnte reine Normalkraft, mit welcher das Seil 6 auf die Klemmbacke 2 gedrückt wird. Diese Normalkraft ergibt sich aus dem Hebelverhältnis a/b zu

$$F_N = \frac{a}{b} \cdot F_Z \qquad \text{(hier } \frac{a}{b} \approx 2,5\text{)}$$

Für alle Zugkräfte $F_Z$ kommt es zu einem absolut schlupffreien Klemmen des Seiles, wenn der Reibbeiwert $\mu$ an der Klemmstelle

$$\mu \geq \frac{b}{a}$$

da für den Haltezustand mindestens gilt:

$$F_N \cdot \mu = F_Z$$

oder für ganz sicheres Halten

$$F_N \cdot \mu > F_Z.$$

Liegt das Hebelverhältnis a/b sowie der Reibbeiwert $\mu$ konstruktiv für sicheres Klemmen fest, dann steht die Normalkraft $F_N$, welche das Seil belastet, in einer stets direkten Abhängigkeit von der Zugkraft $F_Z$.

Zum Öffnen bzw. Entlasten des Klemmzustandes wird der Handauslösehebel 4, 5 hochgeschwenkt, bei den hier in den Zeichnungen dargestellten Ausführungsformen um den Drehpunkt 11 in Uhrzeigerrichtung. Dabei drückt die Druckrolle 12 direkt auf die lasttragende Umlenkrolle 10 des Klemmhebels 3 am Seilauslauf. Mit dem Verschwenken des Klemmhebels 3 mit der Klemmrolle 8 weg von der Klemmbacke 2 bricht schon nach geringem Hub die Haltekraft zusammen, und der Klemmhebel läßt sich leichtgängig vollends öffnen, um das Seil 6 gänzlich freizugeben.

**0114214**

Wird durch kräftigen Seilrückzug ($F_{Wi}$) über die einlaufseitige bzw. rücklaufseitige Umlenkrolle 9 eine Rückzugskraft auf den Hebel c ausgeübt, so führt diese zu einem den Klemmhebel 3 um das Drehlager 7 zurückdrehenden (öffnenden) Moment. Dieses ist im Verhältnis zum Haltemoment $F_Z$ . a umso größer, je größer der Hebel c ist. Ist es baulich möglich, den Hebel c deutlich größer als den Wirkhebel a auszuführen, dann ist nur eine kleinere Rückzugskraft $F_{Wi}$ (zum Nachstellen) nötig als vorn am Auslauf als Haltekraft erzeugt wird. Unabhängig von der Auslegung des Hebels c und des Wirkhebels a führt bei ausreichender Rückzugskraft $F_{WI}$ das leichte Anheben des Klemmhebels 3 mit Klemmrolle 8 von der Klemmbacke 2 zum Lösen des Seiles, so daß zurückgeholt werden kann. Wird der Rückzug $F_{WI}$ nachgelassen, dann schwenkt der Klemmhebel 3 selbsttätig in die Klemmstellung zurück.

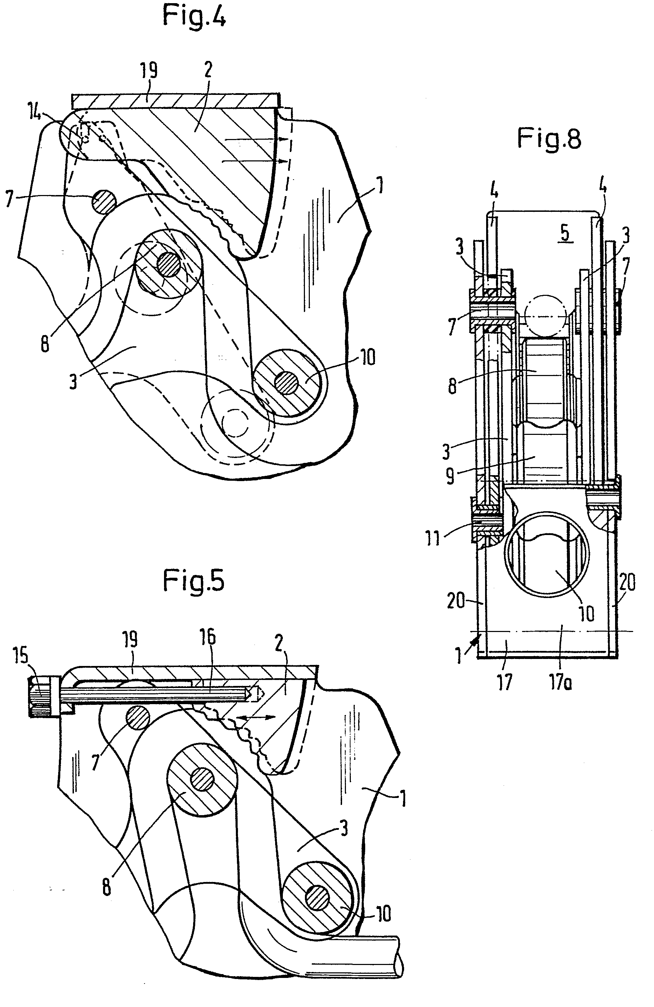

In Fig. 4 ist mit ausgezogenen Linien die Klemmstellung gezeigt, wobei das Gelenk 14 die Klemmbacke 2 mit dem Klemmhebel 3 koppelt. Man erkennt, daß sich der Stift in dem Langloch nur um einen gewissen Betrag drehen kann, wodurch der Hub des Klemmhebels 3 bis zum völligen Öffnen beschränkt wird.

In Fig. 5 ist die Einstellschraube mit Kopf 15 und Gewindeschaft 16 gezeigt, mit deren Hilfe die gehäuseseitige Klemmbacke 2 in Richtung des gezeigten Doppelpfeiles verschoben werden kann, z.B. zur Einstellung auf verschiedene Seildikken.

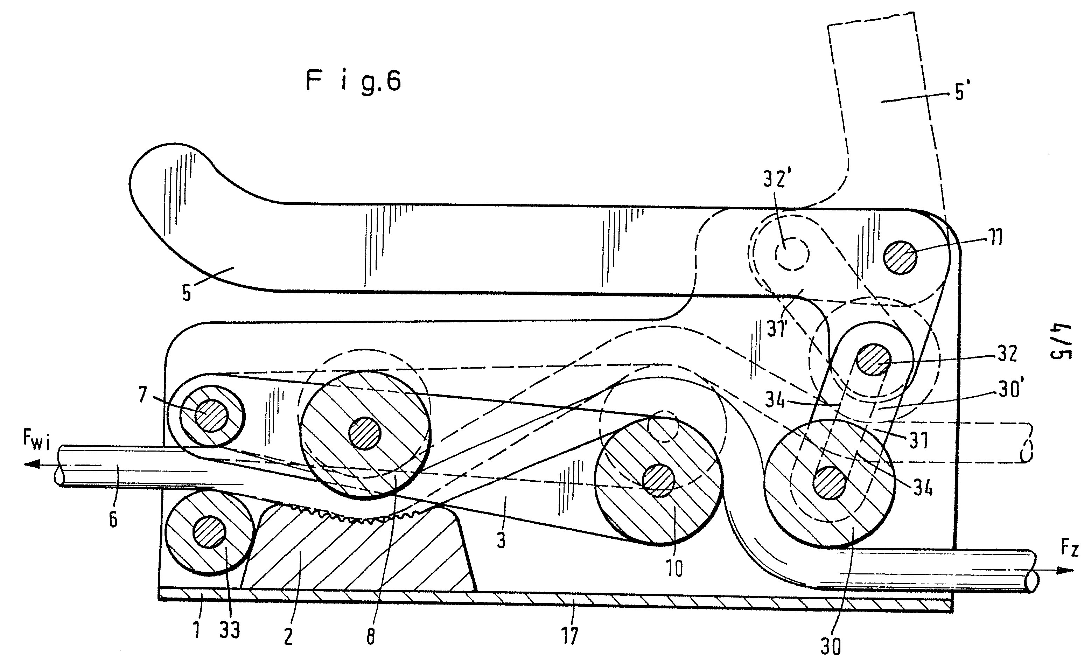

Fig. 6 zeigt eine andere Ausführungsform, bei welcher der Klemmhebel 3 etwa parallel zur Grundfläche 17 des Gehäuses 1 und die Klemmbacke 2 auf der Grundfläche 17 angeordnet ist. Wesentlich ist hier die zusätzlich am Gehäuse fest oder verstellbar angebrachte Stützrolle 30, welche die Abzugsrichtung $F_Z$ im Seil 6 in horizontaler Richtung umzulenken erlaubt. Hierbei wird das Seil 6 zunächst über die rücklaufseitige Umlenkrolle 33 in das Gehäuse unter Drehlager 7 und Klemmrolle 8, dann zwischen Klemmrolle 8 und gehäuseseitiger Klemmbacke 2 vorbei nach oben in den Raum zwischen Klemmrolle 8 und Unlenkrolle 10 geführt, um die Umlenkrolle 10 herumgelegt und über die gehäusefeste oder verstellbare Stützrolle 30 abgezogen. Bei dieser Ausführungsform kann wiederum die rücklaufseitige Umlenkrolle 33 an eine andere Stelle gelegt werden. Denkbar ist auch das Einführen des Seiles über das Drehlager 7.

Die hier verstellbare Stützrolle 30 ist mit ihrer Achse in einem gehäusefesten Schlitz 34 geführt und wird über einen Kniehebel 31, der am Handauslösehebel 5 mit Drehlager 32 befestigt ist, im Schlitz 34 nach unten gegen die Seilkräfte abgestützt.

Wird der Handhebel 5 zum Öffnen des Systems in Handhebelstellung 5' um das Lager 11 verdreht, gelangt die Stützrolle 30 in Position 30', da der Kniehebel 31 (31') die Stützrolle entlang Schlitz 34 zieht.

Mit anderen Worten kann die Ausführungsform der Fig. 6 wie folgt beschrieben werden.

Im Gehäuse 1 sind oben rechts die Bohrung für das Lager 11 des Handhebels 5 und darunter der schwach geneigte, fast senkrecht (zur Grundfläche 17) verlaufende, durchgehende Schlitz 34 vorgesehen, der in Fig. 6 nur zufällig parallel, koaxial mittig zum Kniehebel 31 liegt. Letzterer kann durch die Drehung des Handhebels 5 gegenüber diesem und gegenüber dem Gehäuse 1 gedreht werden, wobei sein eigenes Drehlager 32 an dem nasenförmigen Vorsprung des Handhebels 5 befestigt ist. Dieser Kniehebel 31 ist (wie eine Radaufhängung) eine starre Verbindungsstange für die Stützrolle 30. Dabei ist das Drehlager 32 des Handhebels 5 gegenüber dem Gehäuse frei schwenkbar; denn im Abstand vom Drehlager 32 ist etwa am oberen Ende des Kniehebels 31 die Drehachse der Stützrolle 30 drehbar angebracht. Die Achse der Stützrolle 30 ist länger und stößt durch das Gehäuse 1, den Kniehebel 31 und die Stützrolle 30 hindurch und ist im gehäusefesten Schlitz 34 geführt.

In der mit durchgezogenen Linien gezeigten Stellung befindet sich die Stützrolle 30 in einer vom Kniehebel 31 nach unten vorgeschobenen oder heruntergedrückten Position. Da die Stützrolle 30 wie in einem Doppelgelenk, dem Kniehebel 31, fest liegt, kann sie auch bei Zug im Seil $F_z$ nicht im Schlitz 34 nach oben bewegt werden. Vielmehr erlaubt nur der drehende Kniehebel 31 eine Bewegung der Stützrolle 30 längs des Schlitzes 34.

Wird nämlich jetzt der Handhebel 5 aus der mit durchgezogenen Linien gezeigten Stellung in die obere gestrichelte Position gedreht, dann wird das Drehlager 32 auf einer Kreisbahn um das Lager 11 als Mittelpunkt gedreht und zieht hierbei den Kniehebel 31 in die gestrichelt gezeigte Position desselben, wodurch die Achse der Stützrolle 30 unter Durchführung einer Hubbewegung den Schlitz 34 entlang nach oben gleiten kann. Der Kniehebel 31 dreht bei dieser Bewegung gegenüber dem Gehäuse links herum.

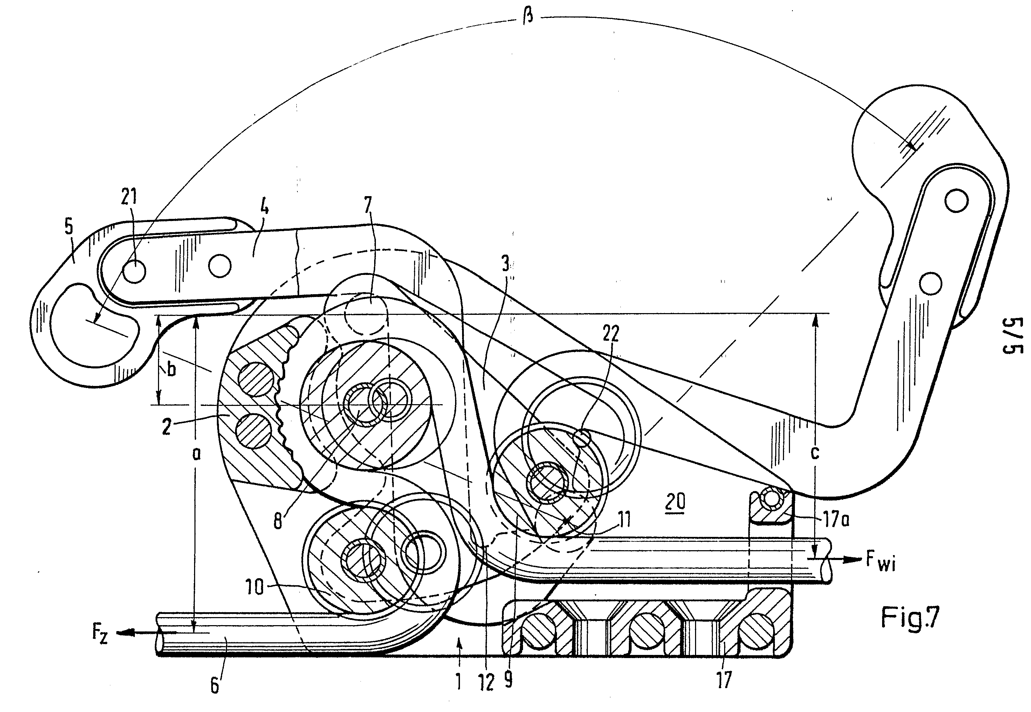

In ähnlicher Darstellungsart wie die Figuren 1 und 6 zeigt Figur 7 eine weitere andere bevorzugte Ausführungsform, bei welcher gleiche Teile mit gleichen Bezugszahlen versehen sind. Das Gehäuse ist allgemein mit 1 bezeichnet und weist zwei im Abstand zueinander angeordnete, parallele und in Draufsicht gleich ausgebildete Seitenwandungen 20 auf, die über einen Sockel 17 mittels Nieten oder Schrauben zusammengehalten sind. Vorn erkennt man die Frontplatte 17a, die eine Art Verblendung darstellt und gemäß der Darstellung der Figur 8 eine kreisförmige Führungsöffnung für das Seil 6 hat. Durch diese erkennt man die auslaufseitige Umlenkrolle 10.

Beim Vergleich der Figuren 1 und 7 ist zu beachten, daß die Zugkraft $F_z$ des Seiles 6 bei der Ausführungsform der Figur 7 nach links zeigt, so daß die Hebel a und c ausgetauscht sind. Außerdem sieht man die Schwenkmöglichkeit des Auslösehebels 4 mit dem Knauf 5, welcher um das Lager 11 um den

Winkel $\beta$ drehbar ist.

Bei der Ausführungsform nach den Figuren 7 und 8 ist das Eingriffsteil 22 nicht eine Druckrolle sondern die nockenartig ausgebildete Fläche 12 am lagerseitigen Ende des Auslösearms 4. Bei der Drehung des Auslösearms 4 aus der in Figur 7 linken Position in die in Figur 7 nach rechts um den Winkel $\beta$ verschwenkte rechte Position kommt die mit der linken Bezugslinie 12 versehene Ausnehmung an der Nockenfläche des Auslösearmes 4 mit dem Zapfen 22, der am Klemmhebel 3 befestigt ist, in Eingriff und schwenkt hierbei den Klemmhebel 3 um seine Drehstelle 7 nach rechts (siehe Figur 7). Hierdurch wird anders als bei der Ausführungsform der Figur 1 nicht die auslaufseitige Umlenkrolle 10 sondern die einlaufseitige Umlenkrolle 9 um den Drehpunkt 7 im Gegenuhrzeigersinn so herausgedreht, daß der ganze Klemmhebel mit der klemmhebelseitigen Klemmrolle 8 das Seil 6 frei gibt. Mit anderen Worten wirkt der Handauslösehebel 4 nicht auf die auslaufseitige Umlenkrolle 10 wie bei Figur 1 sondern auf die einlaufseitige Umlenkrolle 9. Ferner ist im Vergleich zu Figur 1 bei der Ausführungsform nach Fig. 7 die Lage der Klemmbacke 2 nach links verschoben, bleibt aber nach wie vor am Gehäuse befestigt, dient sogar als Distanzstück für die beiden Gehäusewandungen 20, wie oben schon erwähnt.

Aus Figur 8 sieht man die Anordnung der ein- und auslaufseitigen Umlenkrollen 10 und 9 sowie die bewegliche Klemmrolle 8 hinter- bzw. übereinander, welche in der Darstellung der Figur 7 ein Dreieck aufspannen, während ihre Achsen parallel zur Drehachse 7 des Klemmhebels 3 und parallel zueinander verlaufen. In der Darstellung der Figur 8 liegen die drei Umlenkrollen 8-10 hinter- bzw. übereinander und zwischen den beiden Platten des Klemmhebels 3, die über die Außenwandungen 20 (anders als bei der Ausführungsform der Figur 2) gehäusefest und im Abstand zueinander gehalten sind. Außerhalb der beiden Platten des Klemmhebels 3 liegen die leistenförmigen Teile des Auslösearmes 4, und beidseitig ganz außen sind die Gehäusewandungen 20 angeordnet, welche über den Sockel 17 gehaltert sind.

Die übrigen Anordnungen und Funktionen der Teile wirken ähnlich wie oben beschrieben, so daß sich eine weitere Erläuterung erübrigt.

Der Winkel $\alpha$ zwischen der in Verbindung mit der Ausführungsform der Figur 1 besonders erläuterten Linie von dem Drehlager 7 im Gehäuse 1 über die Klemmrolle 8 zur Umlenkrolle 10 gegenüber der Richtung der Zugkraft $F_Z$ im Seil 6 ist bei Figur 7 nichts ausgesagt, denn dort beträgt der Winkel etwa 90°. Die Rollen sind auf die Seildicken derart optimiert, daß sie auch ohne den Winkel $\alpha$ von etwa 45° dicht beieinander angeordnet sein können. Man sieht aus Figur 7, daß der Klemmhebel 3 in seiner Klemmposition steht, wenn der beschriebene Winkel $\alpha$ etwa 90° beträgt, und gelöst ist, wenn er gemäß Darstellung in der rechten Position liegt, bei welcher der Winkel $\alpha$ etwa 5 bis 20, vorzugsweise 15°, beträgt.

0114214

Patentansprüche

----------------------------------

1. Vorrichtung zum lösbaren Festklemmen eines strangförmigen Materials, insbesondere eines Seiles (6), bestehend aus einem Gehäuse (1), einem drehbar darin gelagerten (bei 7) Klemmhebel (3) und zwei Klemmflächen (2, 8), von denen die erste (2) am Gehäuse (1) und die zweite (8) am Klemmhebel (3) angeordnet ist und zwischen denen der Strang (6) verläuft, der ferner um mindestens eine Umlenkstelle (9, 8, 10) herumgeführt ist, wobei der Klemmhebel (3) auf ein Hebelverhältnis b/a so ausgelegt ist, daß höchstens der Reibbeiwert μ an der Reibstelle erreicht wird, d a - d u r c h   g e k e n n z e i c h n e t ,   daß an dem Klemmhebel (3) drei Umlenkstellen (8-10) angeordnet sind, deren Achsen parallel zur Drehachse (7) des Klemmhebels (3) und parallel zueinander verlaufen und ein Dreieck aufspannen und daß ein drehbar (bei 11) im Gehäuse (1) gelagerter Auslösehebel (4) mit einer Auslösenocke (12) für die Beaufschlagung eines am Klemmhebel (3) befestigten Eingriffteiles (10; 22) vorgesehen ist.

2. Vorrichtung nach Anspruch 1, dadurch gekennzeichnet, daß der Auslösehebel (4) zwischen den Gehäuseaußenwandungen (20) einerseits und dem Klemmhebel (3) andererseits angeordnet ist.

3. Vorrichtung nach Anspruch 1 oder 2, dadurch gekennzeichnet, daß das Steuerteil eine Rolle (10, Fig. 1-5) oder ein in Richtung der Drehachse (7) des Klemmhebels (3) aus diesem herausstehender, den Auslösehebel (4) überlappender Vorsprung (22) ist (Fig. 7).

4. Vorrichtung nach Anspruch 1, dadurch gekennzeichnet, daß die zweite, klemmhebelseitige Klemmfläche (8) und/oder die auslaufseitige Umlenkstelle (10) als Rollen ausgebildet sind, wobei die erste Klemmfläche als der Klemmrolle (8) entsprechende, bogenförmige Klemmbacke (2) ausgestaltet ist.

0114214

5. Vorrichtung nach Anspruch 1, dadurch gekennzeichnet, daß die Auslösenocke eine Druckrolle (12) ist.

6. Vorrichtung nach Anspruch 1, dadurch gekennzeichnet, daß der Klemmhebel (3) in der Linie von seinem Drehlager (7) im Gehäuse (1) über die Klemmfläche (8) zu der als Nockenfolger ausgestalteten auslaufseitigen Umlenkstelle (10) gegenüber der als horizontal angenommenen Grundfläche (17) des Gehäuses (1) unter einem Winkel ($\alpha$) von 30 bis 60° schräg angestellt ist, wobei die Richtung der Zugkraft ($F_z$) im Strang (6) als etwa parallel zur Grundfläche (17) verlaufend vorgesehen ist.

7. Vorrichtung nach Anspruch 6, dadurch gekennzeichnet, daß im Abstand senkrecht zur Hebellinie zwischen Drehlager (7) und Umlenkrolle (10) eine rücklaufseitige Umlenkrolle (9) am Klemmhebel (3) drehbar gelagert ist unter Bildung einer U-förmigen Schlaufe des Stranges (6) mit drei Umlenkungen (9, 8, 10).

8. Vorrichtung nach einem der Ansprüche 1 oder 6, dadurch gekennzeichnet, daß die Klemmbacke (2) gegenüber dem Gehäuse (1) verschiebbar und über ein Gelenk (14) mit dem Klemmhebel (3) gekoppelt ist (Fig. 4).

9. Vorrichtung nach einem der Ansprüche 1 oder 6, dadurch gekennzeichnet, daß die Klemmbacke (2) über eine Einstellschraube (15, 16) gegenüber dem Gehäuse (1) einstellbar ist (Fig. 5).

10. Vorrichtung nach einem der Ansprüche 1 oder 6, dadurch gekennzeichnet, daß die Druckrolle (12) zum Auslösen der Klemmung um das Drehlager (11) des Auslösehebels (4) so weit schwenkbar ist, daß sie sich in der Endauslösestellung jenseits der Linie zwischen Umlenkrolle (10) und Drehlager (11) befindet.

11. Vorrichtung zum lösbaren Festklemmen eines strangförmigen Materials, insbesondere eines Seiles (6), bestehend aus einem Gehäuse (1), einem drehbar darin gelagerten (bei 7) Klemmhebel (3) und zwei Klemmflächen (2, 8), von denen die erste (2) am Gehäuse (1) und die zweite (8) am Klemmhebel (3) angeordnet ist und zwischen denen der Strang (6) verläuft, der ferner um mindestens eine Umlenkstelle (9, 8, 10) herumgeführt ist, wobei der Klemmhebel (3) auf ein Hebelverhältnis b/a so ausgelegt ist, daß höchstens der Reibbeiwert µ an der Reibstelle erreicht wird, d a - d u r c h   g e k e n n z e i c h n e t ,  daß an dem Klemmhebel (3) mindestens zwei Umlenkstellen (8, 10) angeordnet sind, deren Achsen parallel zur Drehachse (7) des Klemmhebels (3) und parallel zueinander verlaufen und daß ein drehbar (bei 11) im Gehäuse (1) gelagerter Auslösehebel (5) einen (bei 32) drehbar gelagerten Kniehebel (31) haltert, der als starre Stange für eine Stützrolle (30) dient, deren Achse in einem gehäusefesten Schlitz (34) geführt ist (Fig. 6).

0114214

Fig.1

Fig.2

0114214

Fig.3c

5

4(5)

7

8

3

9

10

11

12

6

Fig.3b

19   1

7

18

2

7

11

Fig.3a

17

0114214

Fig.4

Fig.8

Fig.5

F i g.6

Fig.7

5/5

0114214

0114214

Nummer der Anmeldung

**Europäisches Patentamt**

# EUROPÄISCHER RECHERCHENBERICHT

| | EINSCHLÄGIGE DOKUMENTE | | EP 83111003.6 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | <u>DE - A1 - 2 752 860</u> (ALLIED CHE-MICAL CORP.)<br><br>* Fig. 1; Anspruch 1 *<br><br>-- | 1 | A 62 B 35/02 |
| A | <u>DE - A1 - 3 001 758</u> (TAKATA)<br><br>* Fig. 3-7 *<br><br>-- | 1 | |
| A | <u>DE - A1 - 3 110 068</u>(TOYOTA)<br><br>* Fig. 1 *<br><br>-- | 1 | |
| D,A | <u>DE - C3 - 2 432 956</u> (ADOMEIT)<br><br>* Fig. 2,3 *<br><br>---- | 1 | |

| RECHERCHIERTE SACHGEBIETE (Int. Cl. ³) |
|---|
| A 62 B 35/00<br>A 62 B  1/00 |

Der vorliegende Recherchenbericht wurde für alle Patentansprüche erstellt.

| Recherchenort | Abschlußdatum der Recherche | Prüfer |
|---|---|---|
| WIEN | 23-03-1984 | KUNZE |